# EUROPÄISCHE PATENTSCHRIFT

(11) **EP 2 210 331 B1**
(45) Veröffentlichungstag und Bekanntmachung des Hinweises auf die Patenterteilung: **19.01.2011**
(21) Anmeldenummer: 08804877.2
(22) Anmeldetag: 29.09.2008
(51) Int. Cl.: H02K 1/30, H02K 15/02, B21D 39/03

(54) **VERFAHREN ZUM VERBINDEN VON TEILEN EINES MEHRTEILIGEN ROTORTRÄGERS UND ROTORTRÄGER EINER ELEKTRISCHEN MASCHINE**
METHOD FOR CONNECTING PARTS OF A MULTIPLE-PART ROTOR CARRIER AND ROTOR CARRIER OF AN ELECTRIC ENGINE
PROCÉDÉ DE LIAISON DE PIÈCES D'UN PORTE-ROTOR EN PLUSIEURS PIÈCES ET PORTE-ROTOR D'UNE MACHINE ÉLECTRIQUE

(30) Priorität: 12.10.2007 DE 102007049149
(43) Veröffentlichungstag der Anmeldung: 28.07.2010
(73) Patentinhaber: Robert Bosch GmbH, 70442 Stuttgart (DE)
(72) Erfinder: STOECKL, Rainer, 71701 Schwieberdingen (DE); HOFMEISTER, Anja, 71272 Renningen (DE); BEKAVAC, Miro, 70825 Korntal-Muenchingen (DE)
(86) Internationale Anmeldenummer: PCT/EP2008/063020
(87) Internationale Veröffentlichungsnummer: WO 2009/050027

(56) Entgegenhaltungen:
- EP-A- 0 133 858
- WO-A-2004/004941
- WO-A-2006/017377
- US-A- 4 174 559

## Beschreibung

Die Erfindung betrifft ein Verfahren zum Verbinden von Teilen eines mehrteiligen Rotorträgers einer elektrischen Maschine nach dem Oberbegriff des Anspruchs 1 und einen solchen mehrteiligen Rotorträger.

### Stand der Technik

Bei der Fertigung von Rotoren für elektrische Maschinen sind heute einteilige, umform- oder auch gusstechnisch hergestellte Rotorträger verbreitet, die aufgrund ihrer technischen und, je nach Einsatzgebiet, möglichen wirtschaftlichen Nachteile zunehmend von mehrteiligen Rotorträgem ersetzt werden. Diese mehrteiligen Rotorträger können beispielsweise aus einer Rotornabe, die etwa in Topfform hergestellt wird, und aus einem auf diese aufgebrachten Tragteil in Form eines Zylinderrohrabschnittes bestehen, so dass Rotornabe und Tragteil separat hergestellt werden und das Tragteil beispielsweise in seiner kompletten Axialerstreckung elektrisch geschaltet werden kann, ohne dass Kurvenradien bei Übergang in die Rotornabe zu beachten sind. Ferner kann die Rotornabe innerhalb des Tragteils in weiten Grenzen axial relativ zum Tragteil verschoben beziehungsweise angeordnet werden, so dass sich erhebliche Bauraumvorteile und -freiheiten in der Ausgestaltung der Anordnung ergeben. Die Teile mehrteiliger Rotorträger, beispielsweise die Rotornabe und das Tragteil, müssen zur Ausbildung des Rotorträgers drehfest miteinander verbunden werden, also dergestalt, dass die zu verbindenden Teile keine Relativbewegung zueinander ausführen. Im Stand der Technik werden solche mehrteilige Rotorträger überwiegend geschweißt, wobei jedoch durch den Wärmeeintrag, den die Schweißung unvermeidlich mit sich bringt, in ungünstigen Fällen thermisch bedingter Verzug eines oder mehrerer der Teile auftreten und zu Genauigkeits- und/oder Unwuchtproblemen führen kann, die aufwendig nachbearbeitet werden müssen oder, unbearbeitet, zu Qualitätseinbußen führen können. Ferner sind diese Verschweißungen insgesamt relativ aufwendig.

WO 2006/017377 A offenbart ein Verfahren zum Verbinden von Teilen eines mehrteiligen Rotorträgers einer elektrischen Maschine, wobei der Rotorträger als ein Teil eine Rotornabe und als ein anderes Teil ein auf die Rotornabe angeordnetes Tragteil aufweist, wobei Rotornabe und Tragteil mittels eines Verbindungsvorgangs miteinander drehfest verbunden werden. Aus der EP 0 133 858 A ist das Durchsetzfügen als ein möglicher Verbindungsvorgang bekannt, mit dem Rotorblechlamellen untereinander schnell und kostengünstig verbunden werden. Die US 4 174 559 A zeigt die Verbindung zweier Teile einer Lüfterscheibe mittels Durchsetzfügen. Aus der WO 2004/004941 A ist bekannt, dass zwei umfänglich geschlossene Hohlprofile mit einer Durchsetzfügung verbindbar sind.

### Offenbarung der Erfindung

Aufgabe der Erfindung ist es, ein Verfahren zum Verbinden von Teilen eines mehrteiligen Rotorträgers einer elektrischen Maschine bereitzustellen, das die genannten Nachteile vermeidet, und eine kostengünstige und fertigungstechnisch optimierte Herstellung mehrteiliger Rotorträger ermöglicht.

Diese aufgabe wird erfindungsgemäß durch das Verfahren nach Anspruch 1 gelöst. Die einzelnen Teile des mehrteiligen Rotorträgers werden in aus dem Stand der Technik geläufiger Art und Weise umform- oder gusstechnisch oder zerspanend aus Vollmaterial hergestellt. Die Teile beschränken sich hierbei auf in diesen Verfahren einfach und kostengünstig herzustellenden Teile, insbesondere bei großformatigen elektrischen Maschinen, wie sie etwa in Elektro- und Hybridantrieben Verwendung finden. Diese Teile werden in der hierfür erforderlichen Weise bearbeitet, und dann durch einen Verbindungsvorgang miteinander drehfest verbunden. Als Verbindungsvorgang erfolgt ein Durchsetzfügen, das im Stand der Technik auch als Druckfügen, Clinchen oder Toxen als bewährte Verbindungstechnik für Bleche bekannt ist. Durch das Durchsetzfügen erfolgt kein Wärmeeintrag in die zu verbindenden Teile, so dass ein thermischer Verzug der Teile verhindert wird. Weiter kann das Durchsetzfügen ohne Einbringung von Zusatzwerkstoffen erfolgen, was in wirtschaftlicher und in qualitativer Hinsicht von Vorteil ist. Je nach Genauigkeits- und Toleranzanforderungen an den Rotorträger kann im Anschluss an das Durchsetzfügen eine Weiterbearbeitung beispielsweise in Form von Spannungsarmglühen und/oder eine weitere spanende Bearbeitung auf die gewünschte Endgeometrie des Rotorträgers erfolgen. Unter Durchsetzfügen wird verstanden, dass Material des einen Teils dergestalt in Bereiche des anderen Teils eingetragen wird, insbesondere durch Pressen mit geeigneten Pressstempeln, dass eine kraft- und formschlüssige Verbindung im Fügebereich der zu verbindenden Teile besteht. Näheres zeigen die Ausführungsbeispiele.

In einer weiteren Verfahrensausbildung erfolgt das Durchsetzfügen im vollen Material der Teile. Die Teile werden vor dem Verbindungsvorgang demzufolge im Fügebereich nicht zum Zweck der Verbindungsherstellung bearbeitet, sondern das Durchsetzfügen führt zu einem Kraft- und Formschluss aus dem vollen Material der Teile, also insbesondere ohne Vorbohrungen, Vorstanzungen oder ähnliche zumindest eines der beiden zu verbindenden Teile vorbearbeitende Vorbehandlung. Hierbei ist vorteilhaft, dass das Durchsetzfügen als besonders kostengünstiger, wirtschaftlicher Verbindungsvorgang erfolgt, da, wie beschrieben, eine Vorbehandlung der zu verbindenden Teile im Fügebereich entfällt.

In einer anderen Verfahrensausbildung wird vor dem Durchsetzfügen mindestens eines der Teile im Fügebereich der herzustellenden Verbindungsstelle vorbearbeitet, insbesondere vorgelocht und/oder umgeformt. Insbesondere bei großformatigen Teilen oder solchen mit einer großen Materialstärke kann eine Vorbearbeitung des Fügebereiches wünschenswert sein, um unerwünscht hohe mechanische Belastungen im Fügebereich vermeiden zu können, insbesondere bei sehr großen Materialstärken, bei denen nicht mehr das volle Material mit der gewünschten Genauigkeit durchsetzgefügt werden kann. Durch die Vorbearbeitung, beispielsweise eine Vorlochung, Vorstanzung oder auch Umformung wird das Durchsetzen des Materials des einen Teils mit Material des anderen Teils erleichtert, da der den Verbindungsvorgang durchführende Pressenstempel nicht mehr mehrere Teile in voller Materialstärke umformen muss. Zum Einen reduziert sich hierbei die aufzubringende Pressenkraft, zum Anderen lässt sich gerade bei großen Materialstärken eine bessere Präzision des Verbindungsvorgangs erreichen.

Erfindungsgemäß ist ausserdem ein mehrteiliger Rotorträger gemäß Anspruch 4 Vorgesehen. Wie vorstehend beschrieben, wird die Durchsetzfügestelle im Wege der Kaltverformung als Materialdurchsetzung des Materials des einen Teils mit Material des anderen Teils durch Kraftbeaufschlagung mittels eines Pressenstempels hergestellt. Ein unnötiger Wärmeeintrag und insbesondere ein thermisches Verziehen der zu verbindenden Teile wird hierdurch in vorteilhafter Weise vermieden.

In einer weiteren Ausführungsform des Rotorsträgers ist die Durchsetzfügestelle aus dem vollen Material der Teile erstellt. Insbesondere bei nicht besonders großer Materialstärke eines oder mehrerer Teile lässt sich so kostengünstig eine drehfeste Verbindung ohne großen Fertigungsaufwand herstellen.

In einer anderen Ausführungsform weist das mindestens eine Teil eine Formung oder eine Umformung auf, in die durch das Durchsetzfügen Material des anderen Teils hineingedrängt ist. Hierbei lassen sich kostengünstig auch materialstarke Teile miteinander im Wege des Durchsetzfügens verbinden, ohne dass der Rotorträger durch das bislang erforderliche Verschweißen der Teile einen unerwünschten Wärmeeintrag erfährt. Durch die Formung oder Umformung lässt sich beispielsweise ein formschlüssiges Überlappen oder Überklappen von Material des einen Teils über Material des anderen Teils erreichen, so dass eine ganz besonders feste, formschlüssige Verbindung zwischen den zu verbindenden Teilen erzielt werden kann.

Weitere vorteilhafte Ausführungsformen ergeben sich aus den Unteransprüchen und aus Kombinationen derselben.

Die Erfindung wird nachfolgend anhand von Ausführungsbeispielen näher erläutert, ohne jedoch auf diese beschränkt zu sein.

### Kurze Beschreibung der Zeichnungen

Es zeigen
- Figur 1: einen zweiteiligen Rotorträger mit Rotornabe und hierauf angeordnetem Tragteil im Längsschnitt;
- Figur 2: denselben Rotorträger in perspektivischer Darstellung;
- Figur 3: das Durchsetzfügen aus dem vollen Material;
- Figur 4: das Durchsetzfügen aus dem vollen Material ohne Auskragung;
- Figur 5: das Durchsetzfügen mit einem vorgelochten Teil und
- Figur 6: das Durchsetzfügen mit zwei vorgelochten Teilen, von denen eines vorher umgeformt ist.

### Ausführungsform(en) der Erfindung

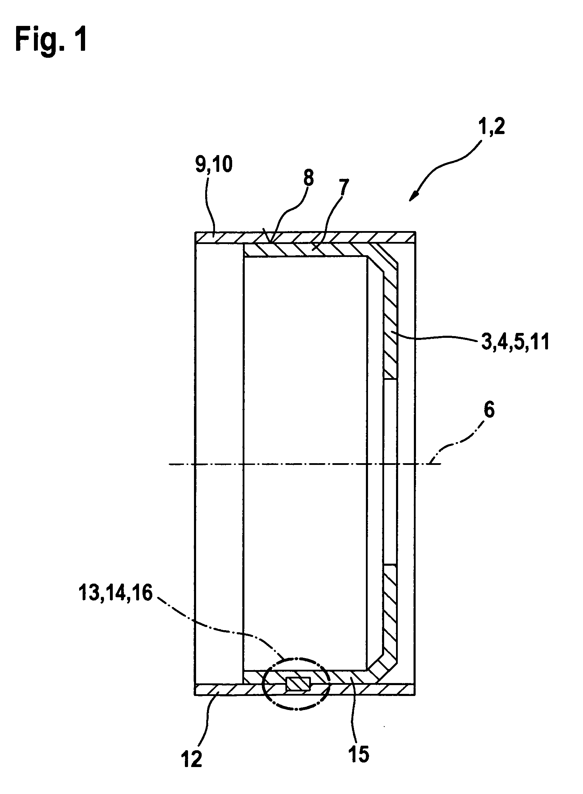

Figur 1 zeigt einen Rotorträger 1, nämlich einen zweiteiligen Rotorträger 2. Dieser besteht aus einer Rotornabe 3, die im Wesentlichen in Form eines Topfes 4 ausgebildet ist, wobei der Topf 4 ein Rotationskörper 5 ist, der zu einer Drehachse 6 des Rotorträgers 1 rotationssymetrisch ausgebildet ist und eine zur Drehachse 6 im Wesentlichen parallele Seitenwandung 7 aufweist, auf deren Außenseite 8 ein Tragteil 9 des Rotorträgers 1 zur Ausbildung des zweiteiligen Rotorträgers 2 aufgebracht wird, und wobei das Tragteil 9 als Rohrabschnitt 10 ausgebildet ist. Die Rotornabe 3 bildet hierbei das eine Teil 11 des Rotorträgers 1, während das Tragteil 9 das andere Teil 12 des Rotorträgers 1 bildet. Das eine Teil 11 ist mit dem anderen Teil 12 über mindestens eine Verbindungsstelle 13 verbunden, die als Durchsetzfügestelle 14 ausgebildet ist. Hierbei wird Material 15 des einen Teils 11 in das andere Teil 12 eingetragen, so dass das andere Teil 12 mit Material 15 des einen Teils 11 durchsetzt ist. Es ergibt sich hierdurch eine drehfeste Verbindung 16, so dass bei Rotation der Rotornabe 3 das Tragteil 9 ohne Relativbewegung zur Rotornabe 3 mitgenommen wird. Selbstverständlich sind im Regelfall mehrere bis viele Verbindungsstellen 13 vorgesehen, abhängig von der Dimensionierung des Rotorträgers 1, insbesondere hinsichtlich seines Durchmessers und seines Gewichts, des Weiteren abhängig von den zu übertragenden Kräften und Drehmomenten. Die Verbindungsstelle 13 ist hier lediglich exemplarisch als einzelne Verbindungsstelle 13 dargestellt.

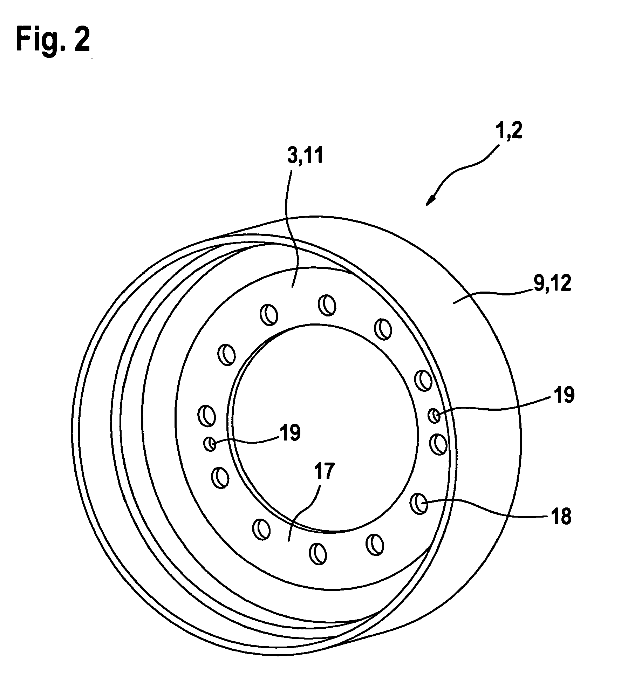

Figur 2 zeigt den Rotorträger 1, nämlich den zweiteiligen Rotorträger 2 mit der Rotornabe 3 als dem einen Teil 11 und dem mit diesem drehfest verbundenen anderen Teil 12, nämlich dem Tragteil 9. Zur Montage des Rotorträgers 1 an einer hier nicht dargestellten weiteren Vorrichtung, beispielsweise an einem Antriebs- oder Abtriebsstrang, weist die Rotornabe 3 an ihrem Topfboden 17 Montageausnehmungen 18 auf, die insbesondere zur lagerichtigen Ausrichtung mit Drehausrichtmitteln 19 und/oder Zentrierbohrungen kombiniert sein können.

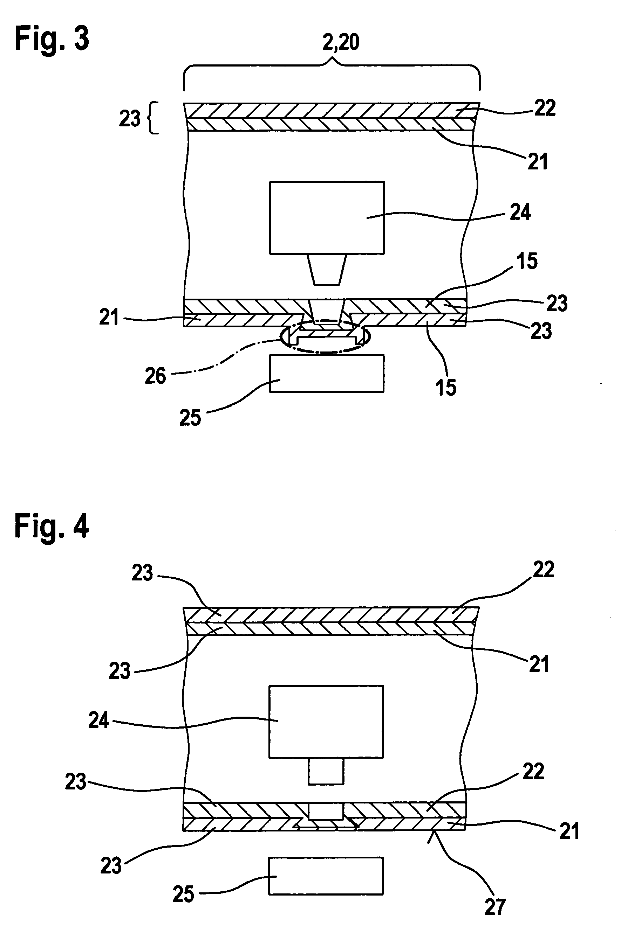

Figur 3 zeigt das Verfahren des Durchsetzfügens an einem Abschnitt 20 des zweiteiligen Rotorträgers 2, nämlich einem hier vereinfacht plan dargestellten Seitenwandungsabschnitt 21 der Rotornabe 3 und einem Rohrwandabschnitt 22 des als Rohrabschnitt 10 ausgebildeten Tragteils 9. Selbstverständlich kann das Durchsetzfügen auch in anderer Richtung als hier dargestellt erfolgen. Das Durchsetzfügen wird hier ohne Vorbearbeitung des Seitenwandabschnitts 21 und/oder des Rohrwandabschnitts 22 aus dem vollen Material 23 beider Teile durchgeführt, dergestalt, dass ein Pressenstempel 24 auf das volle Material 23 der übereinanderliegenden Seitenwandabschnitte 21 und Rohrwandabschnitte 22 auftrifft, und diese in eine ihm formangepasste Matrize 25 hinein umformt. Hierbei wird Material 15 des Rohrwandabschnittes 22 in Material 15 des Seitenwandabschnitts 21 eingetragen, der Seitenwandabschnitt 21 folglich mit Material 15 des Rohrwandabschnittes 22 durchsetzt. Durch die Ausgestaltung der Matrize 25 kommt es zu einer Ausbildung einer Auskragung 26 matrizenseitig des Seitenwandabschnittes 21.

Figur 4 zeigt das Durchsetzfügen wiederum an einem vereinfacht plan dargestellten Seitenwandabschnitt 21 und einem Rohrwandabschnitt 22, wobei die Ausbildung einer Auskragung 26 (Figur 3) vermieden werden soll. Der Pressenstempel 24 ist hierbei in Entsprechung der Matrize 25 derart ausgebildet, dass ein durch Drücken des vollen Materials 23 des Rohrwandabschnittes 22 durch das volle Material 23 des Seitenwandabschnittes 21 bewirktes Auskragen nicht erfolgt, sondern eine Umformung des Seitenwandabschnittes 21 über eine dem Seitenwandabschnitt 21 zugewandte Matrizenseite 27 hinaus nicht erfolgt.

Umgeformt wird hierbei lediglich das volle Material 23 des Rohrwandabschnittes 22, so dass dieses nach unten seitlich in das volle Material 23 des Seitenwandabschnittes 21 hineingedrückt wird, ohne dass jedoch eine Verformung des Seitenwandabschnittes 21 hin zur Matrize 25 erfolgt. Die Matrize 25 ist in diesem Fall zur Matrizenseite 27 hin bevorzugt plan ausgebildet.

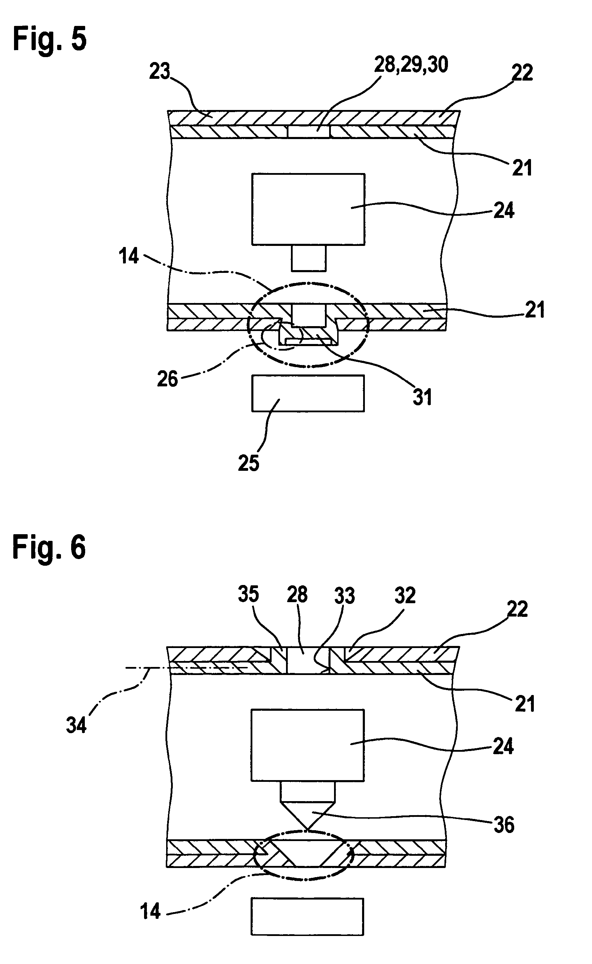

Figur 5 zeigt das Durchsetzfügen mit einem Seitenwandabschnitt 21, der nach einer Vorbearbeitung eine Ausnehmung 28, beispielsweise eine Lochstanzung 29 oder eine Bohrung 30 aufweist. Der auf ihm liegende Rohrwandabschnitt 22 ist nicht vorbearbeitet, insbesondere nicht vorgelocht; hinsichtlich des Rohrwandabschnittes 22 erfolgt das Durchsetzfügen im vollen Material 23. Der Pressenstempel 24 bildet in Zusammenwirken mit der Matrize 25 eine topfförmige Durchsetzung 31 der in dem Seitenwandabschnitt 21 eingebrachten Ausnehmung 28 aus, wobei die Auskragung 26 die Ausnehmung 28 matrizenseitig umgreift und so eine gute Festigkeit der in dieser Weise ausgebildeten Durchsetzfügestelle 14 erreicht wird.

Figur 6 zeigt das Durchsetzfügen bei Vorbearbeitung beider Teile, nämlich des Seitenwandabschnittes 21 und auch des Rohrwandabschnitts 22. Der Rohrwandabschnitt 22 weist ebenso wie der Seitenwandabschnitt 21 hierzu die Ausnehmung 28 auf, wobei die Ausnehmung 28 in dem Rohrwandabschnitt 22 als winklig, beispielsweise diagonal angeschnittene/angesenkte Rohrwandabschnittausnehmung 32 ausgebildet ist, dergestalt, dass die Rohrwandausnehmung an der dem Seitenwandabschnitt 21 abgewandten Seite einen größeren Durchmesser aufweist an der dem Seitenwandabschnitt 21 zugewandten Seite. Die Ausnehmung 28 ist in dem Seitenwandabschnitt 21 als Seitenwandausnehmung 33 ausgebildet, dergestalt, dass die Seitenwandausnehmung 33 im Zuge beispielsweise eines kombinierten Stanz-/Umformvorganges hergestellt wurde und eine im Wesentlichen zur Ebene 34 des Seitenwandabschnittes 21 rechtwinklige Auskragung in Richtung auf den Rohrwandabschnitt 22 hin, nämlich insbesondere in die Rohrwandausnehmung 32 hineinkragende Wandauskragung 35 aufweist. Der Pressenstempel 24 weist zur weiteren Ausbildung der Durchsetzfügestelle 14 einen beispielsweise kegeloder kegelstumpfförmig ausgebildeten Stempeldorn 36 auf, der im Zuge des Pressvorganges die Wandauskragung 35 über die Rohrwandausnehmung 32 drückt und hierbei plastisch dauerhaft verformt, so dass die Wandauskragung 35 in die Rohrwandausnehmung 32 kraft- und formschlüssig gedrückt, beziehungsweise gefaltet wird.

## Patentansprüche

1. Verfahren zum Verbinden von Teilen eines mehrteiligen Rotorträgers einer elektrischen Maschine, wobei der Rotorträger als ein Teil eine Rotornabe und als ein anderes Teil ein auf der Rotornabe angeordnetes Tragteil aufweist, wobei Rotornabe und Tragteil mittels eines Verbindungsvorgangs miteinander drehfest verbunden werden, **dadurch gekennzeichnet, dass** als Verbindungsvorgang ein Durchsetzfügen erfolgt.

2. Verfahren nach Anspruch 1, **dadurch gekennzeichnet, dass** das Durchsetzfügen im vollen Material der Teile erfolgt.

3. Verfahren nach einem der vorhergehenden Ansprüche, **dadurch gekennzeichnet, dass** vor dem Durchsetzfügen mindestens eines der Teile im Fügebereich der herzustellenden Verbindungsstelle vorbearbeitet, insbesondere vorgelocht und/oder umgeformt wird.

4. Mehrteiliger Rotorträger einer elektrischen Maschine, der als ein Teil eine Rotomabe und als ein anderes Teil ein auf der Rotornabe angeordnetes Tragteil aufweist, wobei Rotornabe und Tragteil mittels mindestens einer Verbindungsstelle miteinander drehfest verbunden sind, **dadurch gekennzeichnet, dass** als Verbindungsstelle (13) eine Durchsetzfügestelle (14) vorgesehen ist.

5. Rotorträger nach Anspruch 4, **dadurch gekennzeichnet, dass** die Durchsetzfügestelle (14) aus dem vollen Material (23) der Teile (11,12) erstellt ist.

6. Rotorträger nach Anspruch 4 und 5, **dadurch gekennzeichnet, dass** das mindestens eine Teil (11) eine Vorlochung oder eine Umformung aufweist, in die durch das Durchsetzfügen Material (15) des anderen Teils (12) hineingedrängt ist.

## Claims

1. Method for connecting parts of a multi-part rotor support of an electrical machine, with the rotor support having a rotor hub as one part and a supporting part, which is arranged on the rotor hub, as another part, with the rotor hub and the supporting part being connected to one another in a rotationally fixed manner by means of a connection process, **characterized in that** a clinching operation is performed as the connection process.

2. Method according to Claim 1, **characterized in that** the clinching operation is performed with the solid material of the parts.

3. Method according to either of the preceding claims, **characterized in that** at least one of the parts is pre-processed, in particular pre-perforated and/or shaped, in the joining region of the connection point to be produced, before the clinching operation.

4. Multi-part rotor support of an electrical machine, which rotor support has a rotor hub as one part and a supporting part, which is arranged on the rotor hub, as another part, with the rotor hub and the supporting part being connected to one another in a rotationally fixed manner by means of at least one connection process, **characterized in that** a clinching point (14) is provided as the connection point (13).

5. Rotor support according to Claim 4, **characterized in that** the clinching point (14) is created from the solid material (23) of the parts (11, 12).

6. Rotor support according to Claims 4 and 5, **characterized in that** the at least one part (11) has a pre-perforated or shaped portion into which material (15) of the other part (12) is pushed by the clinching operation.

## Revendications

1. Procédé pour relier des pièces d'un porte-rotor en plusieurs pièces d'une machine électrique, le porte-rotor présentant, sous forme d'une pièce, un moyeu de rotor, et sous forme d'une autre pièce, une pièce de support disposée sur le moyeu de rotor, le moyeu de rotor et la pièce de support étant reliés l'un à l'autre de manière solidaire en rotation au moyen d'une opération de liaison, **caractérisé en ce que** l'opération de liaison est un assemblage par agrafage.

2. Procédé selon la revendication 1, **caractérisé en ce que** l'assemblage par agrafage a lieu dans le matériau massif des pièces.

3. Procédé selon l'une quelconque des revendications précédentes, **caractérisé en ce qu'**avant l'assemblage par agrafage, au moins l'une des pièces est prétraitée, notamment préperforée et/ou déformée, dans la zone du joint de l'emplacement d'assemblage à créer.

4. Porte-rotor en plusieurs pièces d'une machine électrique, qui présente sous forme d'une pièce, un moyeu de rotor, et sous forme d'une autre pièce, une pièce de support disposée sur le moyeu de rotor, le moyeu de rotor et la pièce de support étant reliés l'un à l'autre de manière solidaire en rotation au moyen d'au moins une opération de liaison, **caractérisé en ce que** l'on prévoit comme emplacement d'assemblage (13) un emplacement d'assemblage par agrafage (14).

5. Porte-rotor selon la revendication 4, **caractérisé en ce que** l'emplacement d'assemblage par agrafage (14) est créé dans le matériau massif (23) des pièces (11, 12).

6. Porte-rotor selon les revendications 4 et 5, **caractérisé en ce que** l'au moins une pièce (11) présente un préperforage ou une déformation, dans lequel ou laquelle du matériau (15) de l'autre pièce (12) est enfoncé par l'assemblage par agrafage.
